# FASCICULE DE BREVET EUROPEEN

(11) **EP 3 288 802 B1**
(45) Date de publication et mention de la délivrance du brevet: **12.02.2020**
(21) Numéro de dépôt: 16719854.8
(22) Date de dépôt: 28.04.2016
(51) Int. Cl.: B60R 22/32, B60R 22/195, B60N 2/28

(54) **SIEGE AUTO POUR ENFANT COMPRENANT DES MOYENS DE DETECTION DE CHOCS ET PROCEDE CORRESPONDANT**
KRAFTFAHRZEUGKINDERSITZ MIT MITTEL ZU ERFASSEN VON BESCHLEUNIGUNGEN UND ENTSPRECHENDES VERFAHREN
VEHICLE CHILD SEAT INCLUDING SHOCK DETECTION MEANS AND CORRESPONDING PROCESS

(30) Priorité: 28.04.2015 FR 1553837
(43) Date de publication de la demande: 07.03.2018
(73) Titulaire: Dorel France, 49309 Cholet Cedex (FR)
(72) Inventeur: RENAUDIN, François, 49300 Cholet (FR); GARNIER, Nicolas, 49300 CHOLET (FR)
(74) Mandataire: Vidon Brevets & Stratégie
(86) Numéro de dépôt international: PCT/EP2016/059560
(87) Numéro de publication internationale: WO 2016/174173

(56) Documents cités:
- EP-A1- 2 799 279
- EP-A2- 1 122 136
- DE-A1- 19 703 147
- FR-A1- 2 169 381
- FR-A1- 2 997 352
- US-A1- 2007 228 787
- US-B1- 6 463 372

## Description

### 1. Domaine de l'invention

Le domaine de l'invention est celui de la puériculture. Plus précisément, l'invention concerne les sièges pour enfants destinés à être installés sur la banquette d'un véhicule automobile.

De tels sièges, appelés par la suite sièges auto, sont en particulier conçus pour un niveau de sécurité élevé pour l'enfant, notamment en cas de chocs, comme cela peut être le cas lors d'un accident.

### 2. Art antérieur

De nombreux systèmes ont été développés afin de répondre à ces exigences de sécurité, et assurer d'une part le maintien de l'enfant dans le siège, et d'autre part le maintien du siège par rapport au véhicule.

Concernant le maintien du siège par rapport au véhicule, deux principaux modes de fixation sont en vigueur. D'une part, les sièges auto s'installant à l'aide de la ceinture de sécurité du véhicule. D'autre part, les sièges équipés de pinces ISOFIX, destinées à être solidarisées à des anneaux prévus à cet effet entre (généralement) l'assise et le dossier d'une banquette ou d'un fauteuil d'un véhicule. Ces pinces ISOFIX assurent une retenue efficace en cas de choc.

Cependant, lors d'une décélération forte, le siège auto peut avoir tendance à basculer vers l'avant, selon un mouvement de rotation autour d'un axe passant par l'extrémité des deux pinces ISOFIX. Pour lutter contre ce problème, il est règlementairement prévu un "troisième point" s'opposant à cette rotation, soit sous la forme d'une jambe de force, qui vient prendre appui sur le plancher du véhicule, soit sous la forme d'une sangle de retenue, dite sangle de "top tether", qui relie la partie supérieure du dossier du siège auto à un crochet prévu à cet effet dans le véhicule, à l'arrière du dossier ou à l'intérieur du coffre, par exemple.

La retenue du siège apparaît ainsi efficace, le siège auto étant lié de façon sensiblement rigide. Un inconvénient, cependant, est que toute l'énergie, ou pratiquement toute l'énergie, en cas de choc est transmise au corps de l'enfant.

Des développements importants ont donc également été effectués pour le maintien de l'enfant dans le siège auto. Deux types d'approche sont généralement proposés : le harnais 5 points et le bouclier.

Le bouclier est un élément de structure rigide, solidarisé de façon amovible à la structure de l'assise du siège auto, au-dessus des jambes de l'enfant. Le bouclier empêche que l'enfant soit projeté vers l'avant, hors du siège auto, en cas de choc. En cas de choc important, cet élément peut cependant générer des lésions graves au niveau de l'abdomen de l'enfant, et des parties molles correspondantes (aucune structure osseuse ne les protégeant). Cet inconvénient, ainsi que de nombreux autres, ont conduit le déposant de la présente demande à écarter cette solution.

C'est donc l'autre approche, le harnais à 5 points, qui est privilégiée par le déposant. Un harnais 5 points, lorsqu'il est convenablement réglé, assure un bon maintien de l'enfant par rapport au siège auto, en particulier au niveau des épaules et de la partie haute du corps, d'une part, et des jambes, d'autre part.

Cependant, pour que la sécurité de l'enfant soit optimale, il est important que le harnais soit bien réglé et installé, et, en particulier, que celui-ci soit suffisamment serré. Par ailleurs, en cas de choc, si l'enfant est bien maintenu, il n'en demeure pas moins qu'il peut subir une très forte décélération, en particulier, au niveau de la tête et, du cou et du thorax. Dans certains cas, des éléments absorbants, montés sur des fourreaux eux-mêmes installés sur les bretelles des harnais, ou des éléments gonflables de type airbag, ont été proposés, pour tenter de réduire l'énergie absorbée par le corps de l'enfant et/ou le déplacement de celui-ci.

Cette approche est notamment décrite dans le document FR2997352, qui mentionne également d'autres moyens pour augmenter la tension appliquée au harnais ou aux moyens de maintien du siège, en cas de choc. D'autres moyens, concernant les ceintures des véhicules automobiles, sont proposés dans le document FR2169381.

Il existe cependant un besoin important de réduire les effets des chocs importants sur le corps de l'enfant, notamment en cas d'accident, tout en maintenant efficacement le siège auto dans le véhicule et l'enfant dans le siège auto, et en assurant un confort suffisant pour l'enfant, en l'absence de telles situations extrêmes, qui restent bien sûr rares.

### 3. Exposé de l'invention

La présente invention a pour objectif de pallier ces inconvénients de l'art antérieur.

Ces objectifs, ainsi que d'autres qui apparaîtront pas la suite, sont atteints à l'aide d'un siège auto pour enfant selon la revendication 1.

L'application d'une pré-tension puis d'une limitation d'efforts sur plusieurs éléments de retenue du siège, en particulier d'une part de retenue de l'enfant dans le siège et d'autre part de retenue (top tether, pinces ISOFIX, etc.) au moment d'un choc augmente la sécurité de l'enfant. En effet, la pré-tension permet de solidariser le siège au véhicule d'une part, et/ou l'enfant au siège d'autre part, limitant ainsi, dans un premier temps (très court et débutant dès que possible) les déplacements du siège et de l'enfant vers l'avant et les transmissions d'énergie de choc. Une limitation contrôlée des efforts intervenant juste après (quelques dizaines de millisecondes après, par exemple) permet de réduire la décélération du siège et de l'enfant et le risque d'à-coups brutaux, en accompagnant le mouvement naturel du siège et de l'enfant (par exemple vers l'avant lors d'un choc frontal). Ainsi, lorsqu'un seuil d'effort maximal (pour la santé de l'enfant) est atteint dans la situation de pré-tension, une limitation d'efforts, permettant une dissipation de l'énergie par des déplacements contrôlés, sont mis en œuvre. Les risques de blessures sont ainsi réduits.

On assure en effet un compromis optimisé entre la retenue et les déplacements. Le déplacement de l'enfant est notamment optimisé, par rapport au véhicule, du fait que l'invention combine les déplacements d'une part du siège par rapport au véhicule, et d'autre part de l'enfant par rapport au siège, tout en garantissant la sécurité de l'enfant dans son siège.

Le ou lesdits éléments de retenue du siège peuvent notamment appartenir au groupe comprenant :
- les sangles de solidarisation d'une partie supérieure du dossier dudit siège à un point d'accrochage prévu à cet effet dans un véhicule, dite sangle de « top tether » ;
- les pinces de solidarisation à des anneaux prévus à cet effet dans un véhicule ;
- une jambe d'appui dudit siège ou d'une embase le portant ;
- les moyens de liaison entre une embase et ledit siège.

Le ou lesdits éléments de retenue de l'enfant peuvent notamment appartenir au groupe comprenant :
- les harnais de retenue d'un enfant ;
- les boucliers de retenue d'un enfant.

Selon une caractéristique particulière, lesdits premiers et/ou seconds moyens de pré-tension se déclenchent entre 10 ms et 80 ms après le choc, et lesdits premiers et/ou seconds moyens de limitation d'efforts se déclenche entre 20 ms et 100 ms après le choc.

Ces instants de déclenchement de pré-tension (généralement, en pratique, dès que possible) et de limitation d'efforts (généralement, en pratique, très rapidement, pour contrôler les effets des pré-tensions) ont été étudiés de manière à respectivement maintenir la pré-tension et la limitation d'efforts, tout en appliquant les déplacements souhaités, pendant des laps de temps très courts mais suffisants et adaptés pour permettre une optimisation des conditions de sécurité.

Selon un mode de réalisation particulier, lesdits premiers et/ou seconds moyens de pré-tension et comprennent un moteur électrique et/ou une charge pyrotechnique.

Ainsi, les moyens mis en œuvre sont simples et fiables, et peuvent être contrôlés précisément.

Selon une caractéristique particulière, lesdits premiers et/ou seconds moyens de limitation d'efforts comprennent un moteur électrique, une sangle à allongement contrôlé et/ou un élément mécaniquement déformable.

Notamment, si un moteur est mis en œuvre, celui-ci peut assurer la pré-tension, en tournant dans un premier sens, et la limitation d'efforts, en tournant dans le second sens. Les moyens de contrôle délivrent des signaux de commande du moteur correspondants.

Si la pré-tension est mise en œuvre par une charge pyrotechnique, des seconds moyens distincts sont mis en œuvre pour la limitation d'efforts, tels qu'une sangle à allongement contrôlé et/ou un élément mécaniquement déformable. Ainsi, les opérations de pré-tension d'une part, et de limitation d'efforts d'autre part, font l'objet de commandes distinctes et/ou sont mises en œuvre via des moyens distincts.

Selon une caractéristique particulière, les moyens de retenue de l'enfant comprennent un harnais, et les moyens de retenue du siège auto comprennent une sangle de solidarisation d'une partie supérieure du dossier du siège à un point d'accrochage prévu à cet effet dans un véhicule, dite sangle de « top tether », et des seconds moyens de contrôle et/ou des pinces de solidarisation à des anneaux prévus à cet effet dans un véhicule.

En modifiant la tension de la sangle de top tether, la distance entre le dossier du siège auto et la banquette du véhicule varie, modifiant alors de manière contrôlée le déplacement du siège lors du choc. Lors d'une déformation des pinces, en cas de choc, la distance entre le siège auto et la banquette du véhicule est sensiblement modifiée permettant un déplacement contrôlé du siège.

Selon une approche particulière, lesdits moyens de contrôle actionnent lesdits moyens de limitation d'efforts simultanément et/ou de façon séquencée dans le temps.

L'activation simultanée de deux ou trois moyens de contrôle créé un effet de synergie intéressant. L'efficacité des pré-tensions est démultipliée, et le déplacement du siège auto, et donc de l'enfant, est précisément contrôlé tout en limitant les forces appliquées sur le corps. Dans certains modes de réalisation, les déclenchements de chaque pré-tension et/ou de chaque relâchement peuvent être très légèrement décalés dans le temps (de quelques millisecondes).

L'invention concerne également un procédé de sécurisation d'un siège auto pour enfant selon la revendication 10.

### 4. Liste des figures

D'autres caractéristiques et avantages de l'invention apparaîtront plus clairement à la lecture de la description suivante de modes de réalisation, donnés à titre de simples exemples illustratifs et non limitatifs, et des figures annexées, parmi lesquels :
- la **figure 1** illustre schématiquement un exemple de siège auto selon l'invention ;
- la **figure 2** présente le siège de la figure 1, équipé d'un mannequin représentatif d'un enfant, et subissant un choc correspondant à une situation d'accident ;
- la **figure 3** présente, schématiquement, les trois éléments de retenue (« top-tether », harnais, pinces ISOFIX) sur lesquels peut s'appliquer l'approche de l'invention ;
- les **figures 4A, 4B, 4C et 4D** illustrent de manière schématique un système de « top-tether » et différents modes de réalisation d'une pré-tension de ce « top-tether » :

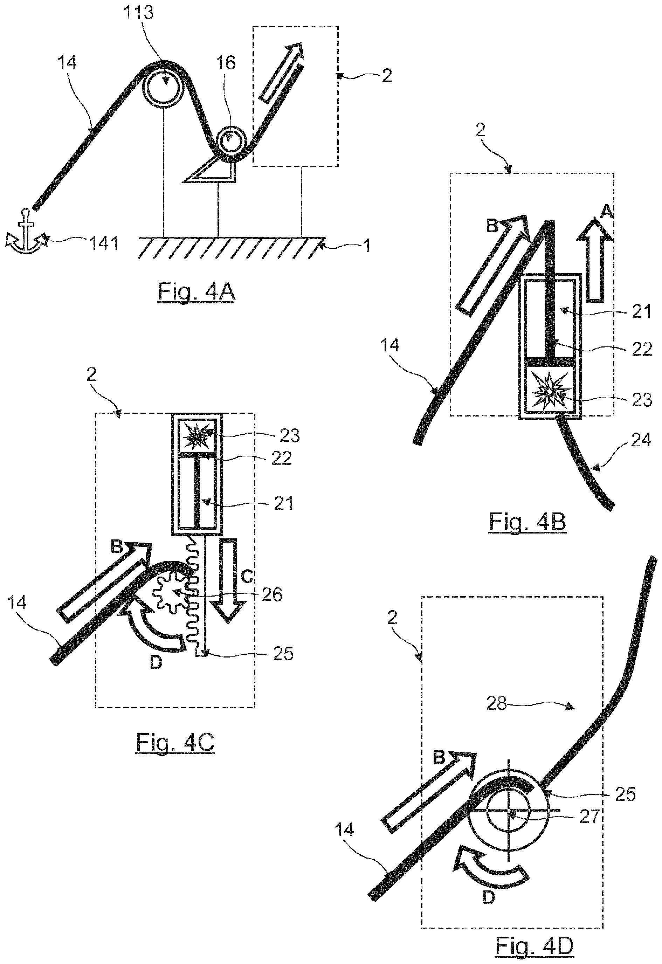

   - **figure 4A** **:** mise en œuvre d'une sangle de « top-tether » dans un siège auto ;
   - **figure 4B** : système de pré-tension de « top-tether », appliqué au système de la figure 4A, selon un premier mode de réalisation mettant en œuvre une charge pyrotechnique et un mouvement linéaire de sangle ;
   - **figure 4C** : système de pré-tension de« top-tether », appliqué au système de la figure 4A, selon un deuxième mode de réalisation mettant en œuvre une charge pyrotechnique et un mouvement de rotation de sangle ;
   - **figure 4D** : système de pré-tension de « top-tether », appliqué au système de la figure 4A, selon un troisième mode de réalisation mettant en œuvre un moteur et un mouvement de rotation de sangle ;

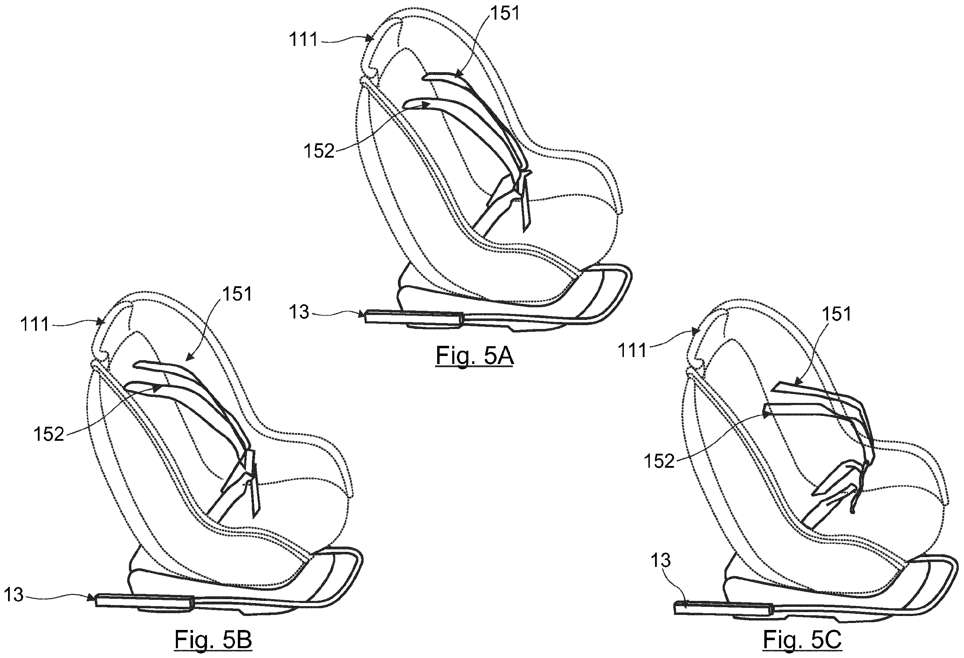

- les **figures 5A, 5B et 5C** sont des vues en trois dimensions du siège auto, et en particulier du harnais, au cours d'un choc, dans trois configurations successives :
   - **figure 5A** **:** harnais en configuration nominale ;
   - **figure 5B** : harnais en configuration de pré-tension ;
   - **figure 5C** : harnais en configuration de relâchement ;

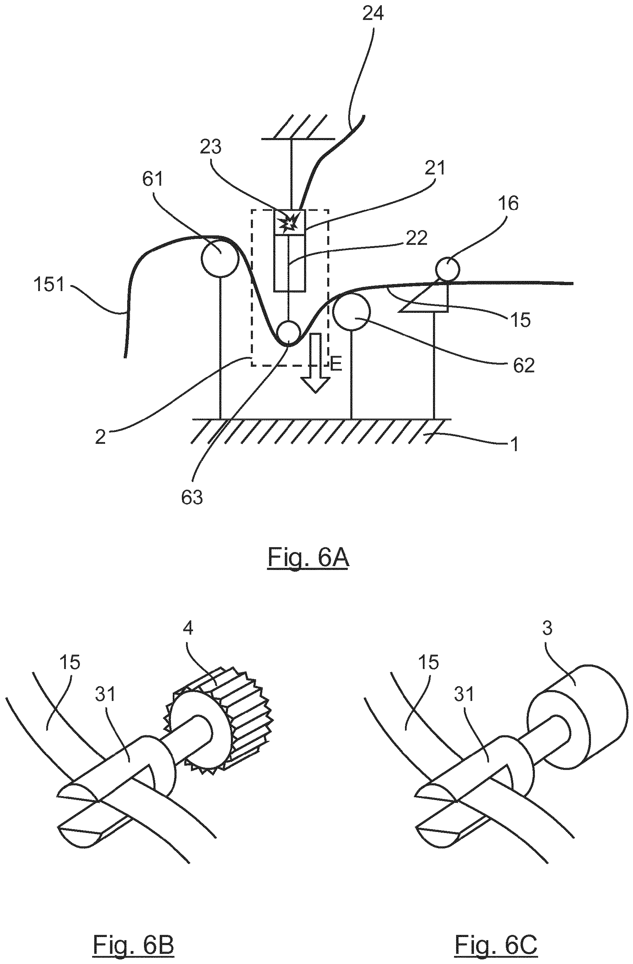

- les figures **6A et 6B** illustrent de manière schématique différents modes de réalisation d'une pré-tension du harnais :
   - **figure 6A** **:** système de pré-tension de harnais, selon un premier mode de réalisation mettant en œuvre une charge pyrotechnique et un mouvement linéaire de sangle ;
   - **figure 6B** **:** mâchoire d'entraînement en rotation du harnais selon un deuxième mode de réalisation d'une pré-tension du harnais mettant en œuvre une charge pyrotechnique et un mouvement de rotation de sangle ;
   - **figure 6C** : mâchoire d'entraînement en rotation du harnais selon un troisième mode de réalisation d'une pré-tension du harnais mettant en œuvre un moteur et un mouvement de rotation de sangle ;

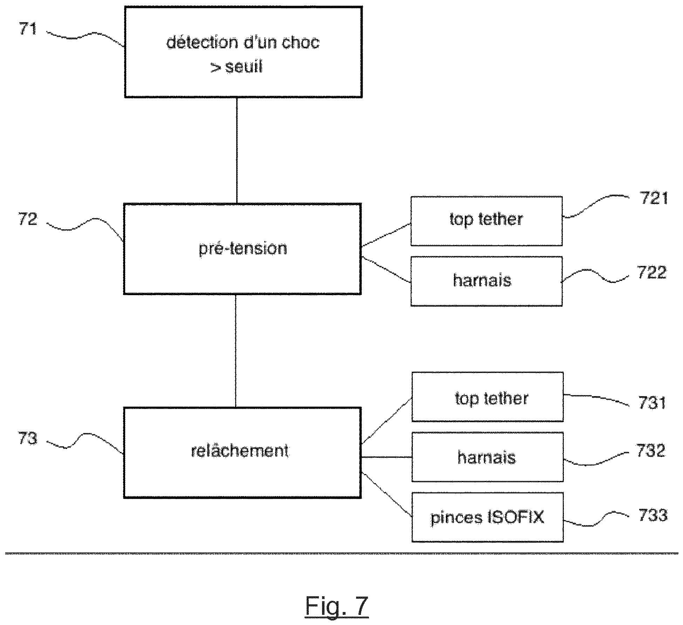

- la **figure 7** illustre les étapes d'un procédé de sécurisation d'un siège auto selon un mode de réalisation particulier de l'invention.

### 5. Description détaillée de l'invention

### 5.0 Principe général de l'invention

L'invention propose d'améliorer la sécurité d'un enfant placé dans un siège auto, en cas de choc, en optimisant les efforts et les déplacements appliqués à l'enfant. Pour ceci, on applique simultanément un contrôle du déplacement subi par l'enfant par rapport au véhicule dans lequel il est installé, en contrôlant d'une part un premier déplacement du siège auto par rapport au véhicule, et d'autre part un second déplacement de l'enfant par rapport au siège.

On comprend que les déplacements permettent d'absorber l'énergie. En combinant ces deux déplacements, l'enfant subit un déplacement plus important, correspondant sensiblement à la somme des deux déplacements. On assure ainsi une absorption efficace de l'énergie.

Ces déplacements sont contrôlés, par des moyens de limitation d'efforts (ou de dissipation de l'énergie). Pour que ces limitations d'efforts soient efficaces, il convient qu'elles soient appliquées de façon contrôlée. Pour cette raison, on applique préalablement une pré-tension, pour rattraper les jeux sur chaque élément de retenue contrôlé.

Il n'est bien sûr pas souhaitable, pour l'enfant, que cette pré-tension soit trop importante, au risque de provoquer des blessures. Ainsi, dès que le choc est détecté, des moyens de contrôle délivrent des commandes de pré-tension, qui assurent immédiatement un rattrapage des jeux. Dès qu'un seuil prédéterminé est atteint (par exemple un effort maximum sur le thorax de l'enfant), on met en œuvre une limitation des efforts, en d'autres termes une dissipation de l'énergie, qui va autoriser un déplacement contrôlé du siège d'une part, et de l'enfant d'autre part.

On assure donc un compromis entre la retenue et le déplacement, pour dissiper l'énergie, avec un effort constant ou quasi-constant pendant ce déplacement.

La pré-tension apporte un gain sur le déplacement au début de la gestion du choc, en rattrapant les jeux, puis on pilote le déplacement. On peut notamment contrôler ce déplacement en autorisant le même déplacement de la tête qu'avec un siège réagissant de façon passive, mais en réduisant les efforts au niveau du cou et du thorax.

Ceci suppose d'agir sur plusieurs paramètres (retenue du siège et retenue de l'enfant, de façon contrôlée et le cas échéant légèrement décalé dans le temps).

Dans une approche particulière, une stratégie de limitation d'efforts spécifique est définie en fonction d'un ou plusieurs paramètres, notamment le poids de l'enfant (on comprend en effet que, par exemple, l'effort maximum toléré par l'enfant est fonction de son poids). Dans tous les cas, le rattrapage de jeux est en revanche activé immédiatement.

Les opérations de pré-tension d'une part et de limitation d'efforts d'autre part sont mis en œuvre par des moyens distincts (moyens pyrotechniques par exemple, pour la pré-tension, et éléments déformables par exemple, pour la limitation d'efforts) ou font l'objet de commandes distinctes, délivrées par des moyens de contrôle (par exemple lorsque la pré-tension et la limitation d'efforts sont assurées par un moteur).

### 5.1 Description d'un mode de réalisation

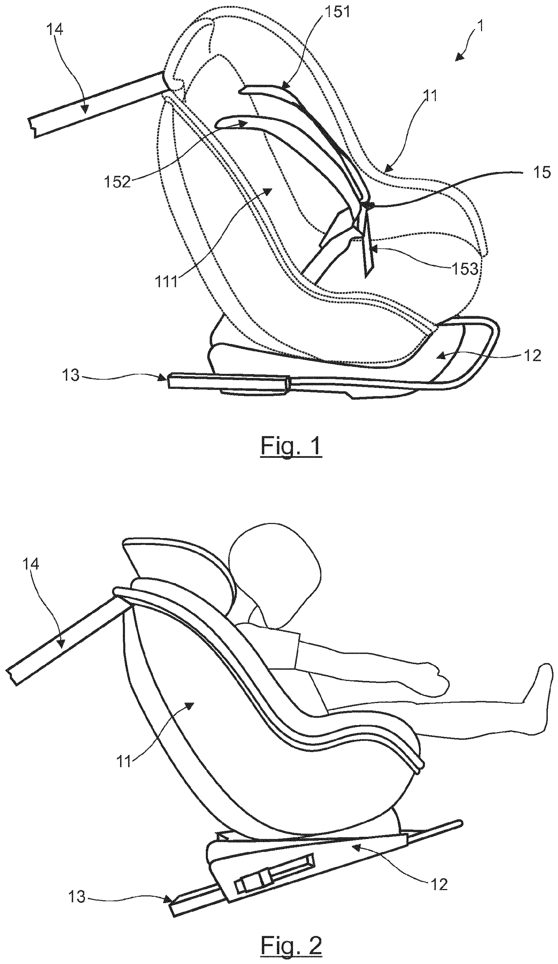

Dans le mode de réalisation illustré **figure 1****,** le siège auto **1** présente une structure **11,** par exemple, en matière plastique (qui sera ensuite recouverte d'une garniture, non représentée), qui définit un dossier **111** et une assise **112.** Cette structure **11** est montée sur une embase **12,** qui peut notamment permettre une inclinaison de la structure **11,** et/ou une rotation de celle-ci, pour l'amener dans une position d'installation de l'enfant, face à la portière du véhicule. Selon les modes de réalisation, la structure **11** peut être solidarisée de façon définitive, ou la structure **11** peut être séparable de l'embase.

L'embase **12** porte des pinces ISOFIX **13** (dans d'autres modes de réalisation, l'embase étant partie intégrante du siège auto, les pinces peuvent être montées directement sur la structure **11**). Ces pinces ISOFIX **13** présentent une forme adaptée pour être solidarisées à des anneaux prévus à cet effet dans le véhicule.

Une sangle de « top-tether » **14** est également prévue, pour s'opposer au basculement vers l'avant du siège, en cas de choc. Cette sangle, dont les caractéristiques principales sont, au même titre que les pinces ISOFIX **13,** normalisées, s'étend depuis la partie supérieure du dossier ou de l'embase, et est munie à son autre extrémité d'un crochet, permettant sa solidarisation au véhicule. Des moyens sont prévus pour régler la longueur utile de cette sangle **14** et sa tension suffisante.

Le siège **11** est enfin muni d'un harnais 5 points **15,** présentant notamment deux bretelles **151, 152** et une patte d'entrejambe **153.**

Les pinces ISOFIX **13** et la sangle de « top-tether » **14** permettent une solidarisation efficace au véhicule, et le harnais **15** permet un maintien efficace de l'enfant dans le siège **11.**

Cependant, en cas de choc important, l'enfant peut être soumis à des forces très importantes, pouvant provoquer des blessures sévères. Ainsi, comme le montre par exemple la **figure 2****,** dans le cas d'un choc frontal, le corps de l'enfant tend à être projeté vers l'avant, et le thorax, le cou et la tête subissent des forces très élevées.

Pour pallier ce risque de blessure de l'enfant, le siège **1** comporte des moyens de détection d'un choc, permettant de faire varier de façon contrôlée la tension d'un ou plusieurs éléments de retenue du siège au véhicule d'une part, et de l'enfant au siège d'autre part.

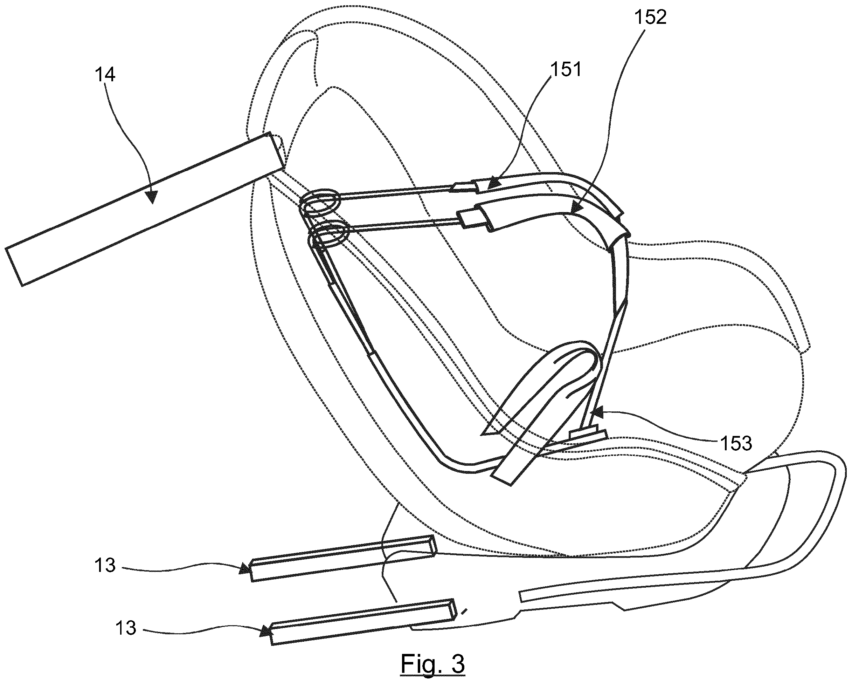

En particulier, une pré-tension peut être réalisée sur la sangle de « top-tether » **14,** les pinces ISOFIX **13,** et/ou le harnais **15** de maintien de l'enfant au siège. Ces trois éléments sont illustrés de manière détaillée sur la **figure 3****.** Dans une variante de réalisation de l'invention, une pré-tension peut être appliquée à d'autres éléments de retenue comme par exemple un bouclier de retenue de l'enfant au siège, et/ou des éléments de liaison d'une embase avec le siège et/ou une jambe d'appui de l'embase sur le sol du véhicule. Comme expliqué par la suite, il est intéressant que la tension soit contrôlée sur plusieurs de ces éléments, de façon simultanée ou selon une séquence prédéterminée.

Le terme pré-tension fait référence à une tension de valeur prédéterminée, appliquée aux éléments de retenue, au moment du choc. Cette pré-tension est appliquée selon une direction contraire au mouvement naturel du siège et/ou de l'enfant lors d'une décélération, c'est-à-dire le basculement du siège et/ou la projection de l'enfant vers l'avant dans le cas d'un choc frontal.

La pré-tension, se déclenchant par exemple entre 10 ms et 80 ms après le choc, est suivie dans un second temps d'un relâchement contrôlé de la tension appliquée sur les éléments de retenue, assurant une limitation d'efforts, c'est-à-dire une dissipation d'énergie, pendant laquelle le siège se déplace par rapport au véhicule et l'enfant se déplace par rapport au siège, de façon contrôlée. Ces limitations d'efforts peuvent intervenir sensiblement entre 20 ms et 100 ms après le choc.

L'application d'une pré-tension augmente notablement la sécurité de l'enfant au moment d'un choc, en ce qu'elle permet de solidariser le siège au véhicule d'une part, et/ou l'enfant au siège d'autre part, de façon optimisée, en rattrapant les jeux et en limitant ainsi les déplacements vers l'avant et les transmissions d'énergie de choc.

La limitation d'efforts appliquée aux éléments de retenue, suite à la pré-tension, dès qu'un seuil d'efforts est atteint (le cas échéant variable, et notamment fonction du poids de l'enfant) permet quant à lui de réduire la décélération du siège et de l'enfant, en autorisant un déplacement accompagnant le mouvement naturel du siège et de l'enfant, vers l'avant du véhicule (dans le cas d'un choc frontal), et en réduisant les risques d'à-coups brutaux.

La pré-tension et le relâchement sont appliqués sur au moins deux éléments de retenue distincts, en cas de choc. Notamment, le déplacement de l'enfant par rapport au véhicule est optimisé, et combine le déplacement du siège et celui de l'enfant par rapport à ce siège. Ainsi, la sécurité de l'enfant est encore renforcée, par synergie des bénéfices de la pré-tension et du relâchement de chacun des éléments.

Différents modes de réalisation de la pré-tension, appliquée d'une part à la sangle de « top-tether » et d'autre part aux sangles du harnais, sont décrites dans les paragraphes suivants. La description qui suit est également valable, moyennant des adaptations qui apparaîtront directement à l'homme du métier, pour les autres systèmes de retenue (bouclier, pinces ISOFIX ...) non décrits dans la présente demande.

### 5.2 Pré-tension et limitation d'effort sur la sangle de « top-tether »

Les figures **4A à 4D** concernent la sangle **14** de « top-tether » du siège auto. En particulier, la **figure 4A** est un schéma simplifié du montage de la sangle **14** lorsque le siège auto est installé dans un véhicule. La sangle **14** circule dans la partie supérieure du dossier **111** du siège auto et se fixe dans un élément de réception prévu à cet effet dans le véhicule, par le biais d'un crochet **141.** Dans ce mode de réalisation, la sangle **14** suit un trajet en chicane, entre un système anti-retour (ou élément bloqueur) **16** et un élément fixe **113** du dossier **111.**

Le système anti-retour **16** a notamment pour fonction d'ajuster et de maintenir la longueur et la tension de la sangle **14,** lors de l'installation du siège. Ce système anti-retour **16** peut par exemple prendre la forme d'un dispositif auto-serreur classique, permettant, dans sa position par défaut, le déplacement de la sangle dans un seul sens (celui du serrage), et nécessitant une action de libération pour effectuer le desserrage. Il permet de bloquer la sangle **14** de « top-tether » dans une position tendue.

A l'autre extrémité de la sangle **14,** opposée à l'extrémité se fixant à la banquette de véhicule, est prévu un système de pré-tension, et le cas échéant de relâchement **2.** En cas d'accident, des moyens de détection de choc, présents dans le siège, activent ce système de pré-tension **2** afin qu'une pré-tension soit appliquée sur la sangle **14** de « top-tether ». Ces moyens de détection de chocs, dont des exemples sont connus, peuvent comprendre notamment un ou plusieurs accéléromètres, un calculateur. En variante, l'information peut être délivrée ou confirmée par le véhicule lui-même.

Plusieurs modes de réalisation du système de pré-tension **2** sont envisageables. Ils assurent une action sur la partie de la sangle s'étendant après le système anti-retour **16,** de façon à lui imposer un déplacement augmentant la tension de la sangle. Trois exemples sont illustrés schématiquement sur les **figures 4B, 4C et 4D****.**

Selon une première approche, une charge pyrotechnique peut déclencher la pré-tension de la sangle. Pour cela, une pièce mobile, ici sous la forme d'un piston **22,** se déplace dans une chambre **21** du vérin sous l'effet d'une charge explosive **23.** L'énergie produite par la charge **23** est transformée en un déplacement du piston **22,** dont l'extrémité libre est solidarisée directement ou indirectement à la sangle **14,** qui est donc elle-même déplacée, de quelques millimètres ou centimètres, appliquant ainsi la pré-tension requise.

Un premier mode de réalisation est illustré par la **figure 4B****.** Une portion de la sangle **14** située à proximité du dossier du siège **1** est solidarisée à l'extrémité libre du piston **22.** Lorsqu'une situation de choc est détectée, selon des critères prédéterminés (dépassement d'un ou plusieurs seuils et/ou prises en compte de conditions idoines), un signal de déclenchement est délivré via un câble **24,** qui déclenche l'explosion de la charge **23** sous l'action de laquelle le piston **22,** se déplace (flèche A) vers le haut de la chambre **21** du vérin. Il entraîne la sangle **14** de « top-tether » (flèche B) et lui applique ainsi une pré-tension.

Un second mode de réalisation est illustré par la **figure 4C****,** dans lequel la sangle est allongée par un mouvement de rotation. Dans cette variante, l'extrémité libre du piston **22** se prolonge par, ou agit sur, une crémaillère **25,** engrenant avec un arbre denté **26.** Sous l'effet de l'explosion de la charge **23,** le piston **22** se déplace (flèche C) dans la chambre **21** du vérin, induisant un déplacement similaire de la crémaillère **25.** L'arbre denté **26** est alors entraîné en rotation (flèche D). L'extrémité de la sangle **14,** fixée à l'arbre, s'enroule par conséquent autour de celui-ci (flèche B) lors de son mouvement de rotation. Ainsi, une pré-tension est appliquée à la sangle **14.**

Les caractéristiques de la charge pyrotechnique sont choisies de façon à appliquer le déplacement requis et à maintenir la pré-tension pendant un laps de temps suffisant, et avec un temps de déclenchement et une vitesse d'exécution adaptés.

Selon une autre approche, la charge pyrotechnique est remplacée par un moteur électrique. Un troisième mode de réalisation est ainsi illustré par la **figure 4D****,** dans lequel la sangle suit à nouveau un mouvement de rotation, sous l'effet d'un moteur **29.** Ce moteur **29** entraîne un arbre **27** autour duquel est fixée une extrémité de la sangle **14,** par exemple sous la forme illustrée **figure 6B****.** Lorsque le moteur **29** est activé, recevant l'information d'un câble électrique **28,** il entraîne l'arbre **27** en rotation (flèche D), et par conséquent la sangle **14** (flèche B), pour lui appliquer une pré-tension.

Dans tous ces modes de réalisation, la pré-tension de la sangle **14** de « top-tether » permet de solidariser plus fortement le siège **1** à la banquette du véhicule, au moment du choc. Le dossier (non représenté) du siège auto tend ainsi à se rapprocher de la banquette de véhicule auquel il est fixé. Il en résulte que la transmission de l'énergie du choc au siège est limitée. Par ailleurs, cette pré-tension permet de rattraper un éventuel mauvais serrage de la sangle de « top-tether », lors de l'installation du siège.

Dans ces modes de réalisation, une limitation d'efforts sur la sangle de top tether intervient après que la pré-tension ait été appliquée, autorisant un déplacement contrôlé du siège auto (le mouvement du siège auto accompagne le mouvement du choc). Dans le cas des pistons (**figures 4B et 4C**), le piston **22** peut revenir naturellement dans la chambre **21,** la pression créée par la charge explosive diminuant petit à petit. Dans le cas du moteur (**figure 4D**), le relâchement peut être appliqué en faisant tourner le moteur dans l'autre sens.

La limitation d'effort peut également être assurée à l'aide d'un élément déformable, par exemple une pièce métallique pouvant s'allonger par déformation en présence d'une force supérieure à un seuil prédéterminé, ou une sangle à allongement contrôlé, dont le fil et le tissage sont choisis pour que, en présence d'une force supérieure à un seuil prédéterminé, la sangle s'allonge progressivement sans se déchirer.

### 5.3 Pré-tension et relâchement des sangles du harnais

Les figures **5A à 5C** **et** **6A à 6C** illustrent des solutions de contrôle de la pré-tension et du relâchement du harnais **15** de maintien de l'enfant dans le siège auto **1.**

Les **figures 5A, 5B et 5C** illustrent les configurations successives du harnais 5 points au cours d'un choc. Le harnais **15** comporte notamment deux bretelles **151, 152,** dont l'extrémité supérieure est liée à une partie supérieure du dossier **111.** La longueur et la tension des sangles **151, 152** du harnais sont réglées à l'installation de l'enfant dans le siège.

Au moment d'un choc, le harnais **15** quitte une configuration nominale (**figure 5A**) pour prendre une configuration de pré-tension (**figure 5B**) dans laquelle les sangles **151, 152** sont rapprochées du dossier de façon à ramener et maintenir l'enfant (non représenté) contre le siège. La pré-tension des sangles **151, 152** est maintenue pendant un temps prédéterminé (quelques millisecondes ou dizaines de millisecondes) avant d'être relâchée, assurant une limitation d'efforts, de manière à ce que le harnais **15** accompagne le mouvement de l'enfant vers l'avant du véhicule sans créer d'à-coups. La **figure 5C** illustre le harnais **15** dans cette configuration de relâchement.

La **figure 6A** est une illustration schématique d'un mode de réalisation d'un système de maintien du harnais **15** à l'intérieur du siège auto. Les bretelles, respectivement **151, 152** du harnais **15** sont représentées de manière simplifiée par une seule ligne. La partie utile des bretelles **151, 152,** permettant de maintenir l'enfant dans le siège, est représentée sur la gauche du schéma.

Le système de pré-tension **2** est prévu dans le siège, sur le chemin du harnais **15,** entre l'enfant et un système anti-retour **16,** par exemple un auto-serreur classique, permettant, dans sa position par défaut, le réglage des bretelles **151, 152** dans un seul sens (celui du serrage), et nécessitant une action de libération pour effectuer le desserrage. Il permet de bloquer les bretelles **151, 152** du harnais **15** dans une configuration tendue.

A nouveau, plusieurs modes de réalisation du système de pré-tension **2** sont envisageables. Ils assurent une action sur la partie des bretelles s'étendant à l'intérieur du siège 1, avant le système anti-retour **16,** de façon à leur imposer un déplacement permettant d'augmenter leur tension.

Selon un premier mode de réalisation, schématiquement illustré par la **figure 6A**, les bretelles **151, 152** (ou une sangle unique reliant les deux bretelles) s'étendent à l'intérieur du siège auto selon un trajet en chicane, entre des éléments fixes **61, 62** du dossier et une extrémité mobile **63** d'un piston **22.**

Lors d'un choc, un signal de déclenchement est délivré par un câble pyrotechnique **24,** entraînant l'explosion de la charge **23,** ce qui induit le déplacement du piston **22** et de son extrémité mobile **63,** vers le bas de la chambre **21** du vérin. L'extrémité **63** vient exercer une pression sur les bretelles **151, 152** (ou la sangle) qui sont déplacées de quelques millimètres ou centimètres dans un mouvement linéaire vers le bas (flèche E), allongeant alors le trajet dans la chicane.

L'extrémité libre **63** du piston **22** peut être liée à un élément poussoir, ou solidarisée directement ou indirectement aux bretelles **151, 152.**

A nouveau, la charge pyrotechnique est choisie en fonction du déplacement requis et de la durée de pré-tension requise.

Selon un deuxième mode de réalisation, l'énergie de la charge pyrotechnique est utilisée pour créer un mouvement de rotation des bretelles **151, 152,** autour d'un arbre denté (ce système peut être similaire à celui utilisé pour la sangle **14** de top tether, illustré sur la **figure 4C**). La **figure 6B** présente plus précisément une fourchette **31** liée à un arbre denté **4** permettant, selon ce deuxième mode de réalisation, d'enrouler et/ou de dérouler les sangles sur elles pour les tendre et/ou les détendre. A cet effet, une crémaillère (non représentée), par exemple placée à l'extrémité d'un piston, engrène avec l'arbre denté **4.**

Enfin, dans un troisième mode de réalisation, le mouvement de rotation des sangles **151, 152** est généré par un moteur **3,** entraînant en rotation un système enrouleur (à nouveau, une mâchoire **31,** comme illustrée par la **figure 6C****,** peut être utilisée).

Dans tous ces modes de réalisation, la pré-tension des sangles **151, 152** du harnais **15** permet de plaquer plus fortement le dos de l'enfant contre le dossier **111** du siège **1,** au moment du choc. L'énergie de décélération est ainsi transmise au siège **1** plutôt qu'à l'enfant. Par ailleurs, cette pré-tension, permet de rattraper un éventuel mauvais serrage des bretelles **151, 152** du harnais **15,** lors de l'installation du siège.

Dans ces modes de réalisation, un relâchement des bretelles **151, 152** du harnais intervient au bout de la durée de la pré-tension, autorisant un déplacement contrôlé du siège auto (le mouvement du siège auto accompagne le mouvement du choc). Dans le cas des premier et deuxième modes de réalisation (**figures 6A et 6B**), le piston peut revenir naturellement dans la chambre du piston, la pression créée par la charge explosive diminuant petit à petit. Dans le cas du moteur (**figure 6C**), la limitation d'efforts peut être appliqué en faisant tourner le moteur dans l'autre sens.

La limitation d'efforts peut également être assurée à l'aide d'un élément déformable, par exemple une pièce métallique pouvant s'allonger par déformation en présence d'une force supérieure à un seuil prédéterminé, ou une sangle à allongement contrôlé, dont le fil et le tissage sont choisis pour que, en présence d'une force supérieure à un seuil prédéterminé, la sangle s'allonge progressivement sans se déchirer.

### 5.4 Déplacement contrôlé des pinces ISOFIX

Dans le même temps (ou de façon très légèrement décalée dans le temps) qu'un relâchement est appliqué à la **sangle 14** de « top tether » et/ou aux bretelles **151, 152** du harnais, une limitation d'efforts, notamment un déplacement contrôlé, peut être appliqué à la sangle de top-tether et/ou aux bretelles du harnais, une limitation d'efforts peut être également appliqué aux pinces ISOFIX, par exemple à l'aide d'une charge pyrotechnique, qui permet un allongement du support de ces pinces, et/ou d'un élément fusible, apte à se déformer et s'allonger (ou permettre l'allongement du support des pinces.

### 5.5 Combinaison des pré-tensions et des limitations d'efforts

La réalisation d'une pré-tension et d'un relâchement de chacun des systèmes de fixation (top-tether, pinces ISOFIX, harnais), de manière individuelle, augmente sensiblement la sécurité de l'enfant par rapport aux systèmes de fixation standard.

L'invention propose, par ailleurs, une synchronisation intelligente des pré-tensions et limitations d'efforts de ces différents systèmes afin de créer un effet de synergie augmentant encore davantage le confort et la sécurité de l'enfant en cas de choc. Ainsi, le déplacement du siège auto, et donc de l'enfant, est précisément contrôlé, tout en limitant les forces appliquées sur le corps (selon des valeurs biomécaniques calculées par exemple sur mannequin).

Les valeurs biomécaniques sont les propriétés mécaniques du corps soumis à une contrainte, comme par exemple l'excursion de la tête de l'enfant devant être gardée sous contrôle lors d'une décélération.

Les nombreux essais effectués par le Demandeur montre que l'effet de synergie proposé par cette variante de l'invention est important lorsque l'on combine, par exemple, la top-tether et le harnais. Ainsi, selon ces essais (avec un siège et un mannequin particuliers), on constate que l'action sur la top-tether seule permet un gain d'environ 1% sur le déplacement de la tête de l'enfant. De même, l'action sur le harnais seul permet également un gain d'environ 1% sur le déplacement de la tête. En revanche, la combinaison des pré-tensions/relâchements sur la top-tether et le harnais apporte un gain possible de 10% sur le déplacement de la tête de l'enfant. Ces valeurs sont indicatives puisqu'elles ne concernent qu'un type de mannequin et de siège auto, mais démontrent clairement l'efficacité surprenante de la combinaison.

La combinaison de l'action de la top-tether et des pinces ISOFIX génèrera également un déplacement et une cinématique plus efficaces que l'action sur un seul des deux systèmes de fixation, chacun des systèmes étant placé à une extrémité du dossier du siège auto (l'extrémité haute pour la top-tether, l'extrémité basse pour les pinces ISOFIX).

La gestion des temps de déclenchement peut également être adaptée. Les déclenchements des pré-tensions peuvent être simultanés ou légèrement décalés dans le temps, pour agir par exemple d'abord sur la sangle de top-tether, puis quelques millisecondes plus tard sur le harnais. De la même façon, les différentes limitations d'efforts peuvent être simultanés ou successifs.

Dans certains modes de réalisation, ces temps de déclenchement peuvent également être adaptés au cas par cas, en fonction des conditions du choc et/ou des caractéristiques (poids, taille,...) de l'enfant. Notamment, des moyens de contrôle peuvent calculer les instants de déclenchements, et/ou les efforts maximaux appliqués pendant la phase de pré-tension, et donc l'instant de déclenchement de la limitation d'efforts.

### 5.6 Procédé de sécurisation d'un siège auto

L'invention concerne également un procédé de sécurisation d'un siège auto pour enfant comprenant notamment un harnais 5 points, mettant en œuvre l'approche décrite dans les paragraphes précédents.

Ce procédé comprend, dans le mode de réalisation illustré par la **figure 7****,** trois étapes principales.

Tout d'abord, une étape **71** de détection d'un choc supérieur à un seuil prédéterminé, selon une ou plusieurs techniques connues en soi. En cas de détection, au moins un signal de commande est généré, de façon à déclencher une ou plusieurs actions de pré-tensions et/ou de relâchement. Dans le mode de réalisation décrit, il s'agit d'un signal binaire de déclenchement, mais il est également possible de prévoir des signaux multiples et/ou variables, pour prendre en compte des conditions particulières (du choc et/ou de l'enfant). Ce signal peut également piloter d'autres éléments de sécurité, tels que le déclenchement d'un airbag.

Cette commande entraîne une étape **72** de pré-tension d'un ou plusieurs éléments de retenue du siège par rapport au véhicule, ici la sangle de top-tether **721** et d'un ou plusieurs éléments de retenue de l'enfant dans le siège, ici le harnais **722.** Comme illustré précédemment, cette pré-tension peut être notamment assurée par une charge pyrotechnique ou un moteur. L'instant de déclenchement de chaque pré-tension et la durée de celle-ci peuvent être contrôlés, par exemple selon les plages décrites ci-dessus.

Ensuite, une étape **73** de limitation d'efforts est mise en œuvre, lorsqu'un effort maximum est atteint, c'est-à-dire que la pré-tension n'est pas maintenue, mais au contraire très rapidement relâchée, par exemple dans les plages de durée mentionnées ci-dessus. La limitation d'efforts peut être pilotée (par exemple via un moteur) ou assurée par déformation d'un élément rigide, ou encore par allongement contrôlé d'une sangle.

Dans le mode de réalisation illustré, la limitation d'efforts est appliquée successivement (mais dans un laps de temps de quelques millisecondes) sur la sangle de top tether **731,** le harnais **732** et les pinces ISOFIX **733.**

## Revendications

1. Siège auto (1) pour enfant, comprenant des moyens de détection de choc, des premiers moyens d'application d'une pré-tension prédéterminée sur au moins un élément de retenue dudit siège (13, 14) et des seconds moyens d'application d'une pré-tension prédéterminée sur au moins un élément de retenue dudit enfant (15), **caractérisé en ce qu'**il comprend :
- des premiers moyens de limitation d'efforts montés sur ledit au moins un élément de retenue dudit siège (13, 14), autorisant un premier déplacement contrôlé dudit siège (1) par rapport au véhicule dans lequel il est installé ;
- des seconds moyens de limitation d'efforts montés sur ledit au moins un élément de retenue dudit enfant (15), autorisant un second déplacement contrôlé dudit enfant par rapport audit siège (1),
lesdits premiers et seconds moyens d'application d'une pré-tension étant déclenchés par une commande délivrée par des moyens de contrôle alimentés par lesdits moyens de détection de choc, et lesdits premiers et seconds moyens de limitation d'efforts étant actifs dès que ledit siège, respectivement ledit enfant, atteint un effort maximum prédéterminé,
lesdits premiers et seconds déplacements se combinant pour que l'enfant se déplace par rapport au véhicule selon cette combinaison de déplacements.

2. Siège auto (1) selon la revendication 1, **caractérisé en ce que** le ou lesdits éléments de retenue du siège (13, 14) appartiennent au groupe comprenant :
- les sangles de solidarisation (14) d'une partie supérieure du dossier dudit siège à un point d'accrochage prévu à cet effet dans un véhicule, dite sangle de « top tether » ;
- les pinces de solidarisation (13) à des anneaux prévus à cet effet dans un véhicule ;
- une jambe d'appui dudit siège ou d'une embase le portant ;
- les moyens de liaison entre une embase et ledit siège.

3. Siège auto (1) selon l'une quelconque des revendications 1 et 2, **caractérisé en ce que** le ou lesdits éléments de retenue de l'enfant (15) appartiennent au groupe comprenant :
- les harnais (15) de retenue d'un enfant ;
- les boucliers de retenue d'un enfant.

4. Siège auto (1) selon l'une quelconque des revendications 1 à 3, **caractérisé en ce que** lesdits premiers et/ou seconds moyens de pré-tension se déclenchent entre 10 ms et 80 ms après le choc.

5. Siège auto (1) selon l'une quelconque des revendications 1 à 4, **caractérisé en ce que** lesdits premiers et/ou seconds moyens de limitation d'efforts se déclenchent entre 20 ms et 100 ms après le choc.

6. Siège auto (1) selon l'une quelconque des revendications 1 à 5, **caractérisé en ce que** lesdits premiers et/ou seconds moyens de pré-tension comprennent un moteur (29) électrique et/ou une charge pyrotechnique.

7. Siège auto (1) selon l'une quelconque des revendications 1 à 6, **caractérisé en ce que** lesdits premiers et/ou seconds moyens de limitations d'efforts comprennent un moteur électrique, une sangle à allongement contrôlé et/ou un élément mécaniquement déformable.

8. Siège auto (1) selon l'une quelconque des revendications 1 à 7, **caractérisé en ce que** lesdits moyens de retenue d'un enfant (15) comprennent un harnais (15), et **en ce que** lesdits moyens de retenue du siège (13, 14) comprennent une sangle de solidarisation (14) d'une partie supérieure du dossier (111) dudit siège (1) à un point d'accrochage prévu à cet effet dans un véhicule, dite sangle de « top tether » et/ou des pinces de solidarisation (13) à des anneaux prévus à cet effet dans un véhicule.

9. Siège auto (1) selon l'une quelconque des revendications 1 à 8, **caractérisé en ce que** lesdits moyens de contrôle actionnent lesdits moyens de limitation d'efforts simultanément ou de façon séquencée dans le temps.

10. Procédé de sécurisation d'un siège auto (1) pour enfant, comprenant les étapes suivantes :
- détection (71) d'un choc supérieur à un seuil prédéterminé ;
- transmission d'une information de détection de choc à des moyens de contrôle ;
- pré-tension (72) temporaire prédéterminée appliquée sur au moins un élément de retenue dudit siège et sur au moins un élément de retenue dudit enfant, en fonction d'une commande délivrée par lesdits moyens de contrôle,
**caractérisé en ce qu'**il comprend en outre les étapes suivantes :
- limitation (73) des efforts appliqués à au moins un élément de retenue dudit siège, autorisant un premier déplacement contrôlé dudit siège par rapport au véhicule dans lequel il est installé ;
- limitation des efforts appliqués à au moins un élément de retenue dudit enfant, autorisant un second déplacement contrôlé dudit enfant par rapport audit siège.

## Patentansprüche

1. Kinder-Autositz (1), umfassend Aufprallerkennungseinrichtungen, erste Einrichtungen zum Aufbringen einer vorgegebenen Vorspannung auf mindestens ein Rückhalteelement (13, 14) für den Sitz und zweite Einrichtungen zum Aufbringen einer vorgegebenen Vorspannung auf mindestens ein Rückhalteelement (15) für das Kind,
**dadurch gekennzeichnet, dass** er umfasst:
- erste Kraftbegrenzungseinrichtungen, montiert an dem mindestens einen Rückhalteelement (13, 14) für den Sitz, die eine erste kontrollierte Bewegung des Sitzes (1) bezüglich des Fahrzeugs zulassen, in dem er eingebaut ist;
- zweite Kraftbegrenzungseinrichtungen, montiert an dem mindestens einen Rückhalteelement (15) für das Kind, die eine zweite kontrollierte Bewegung des Kindes bezüglich des Sitzes (1) zulassen,
wobei die ersten und zweiten Einrichtungen zum Aufbringen einer Vorspannung durch eine Ansteuerung ausgelöst werden, die durch Steuereinrichtungen ausgegeben wird, die durch die Aufprallerkennungseinrichtungen gespeist werden, und die ersten und zweiten Kraftbegrenzungseinrichtungen aktiv werden, sobald der Sitz bzw. das Kind eine vorgegebene maximale Kraft erreicht,
wobei die erste und die zweite Bewegung kombiniert werden, damit sich das Kind gemäß dieser Kombination von Bewegungen bezüglich des Fahrzeugs bewegt.

2. Autositz (1) nach Anspruch 1, **dadurch gekennzeichnet, dass** die Rückhalteelemente (13, 14) des Sitzes zu der Gruppe gehören, die umfasst:
- die Verbindungsgurte (14) eines oberen Teils der Rückenlehne des Sitzes mit einem dafür vorgesehenen Anschlagpunkt in einem Fahrzeug, genannt "Top Tether"-Gurt;
- die Verbindungsklemmbalken (13) zu dafür vorgesehenen Ringen in einem Fahrzeug;
- ein Stützbein des Sitzes oder eines ihn tragenden Unterteils;
- die Verbindungseinrichtungen zwischen einem Unterteil und dem Sitz.

3. Autositz (1) nach einem beliebigen der Ansprüche 1 und 2, **dadurch gekennzeichnet, dass** das oder die Rückhalteelemente (15) für das Kind zu der Gruppe gehören, umfassend:
- das Rückhaltegeschirr (15) für ein Kind;
- die Halteschalen für ein Kind.

4. Autositz (1) nach einem beliebigen der Ansprüche 1 bis 3, **dadurch gekennzeichnet, dass** die ersten und/oder zweiten Vorspannungseinrichtungen zwischen 10 ms und 80 ms nach dem Aufprall ausgelöst werden.

5. Autositz (1) nach einem beliebigen der Ansprüche 1 bis 4, **dadurch gekennzeichnet, dass** die ersten und/oder zweiten Kraftbegrenzungseinrichtungen zwischen 20 ms und 100 ms nach dem Aufprall ausgelöst werden.

6. Autositz (1) nach einem beliebigen der Ansprüche 1 bis 5, **dadurch gekennzeichnet, dass** die ersten und/oder zweiten Vorspannungseinrichtungen einen Elektromotor (29) und/oder eine pyrotechnische Ladung umfassen.

7. Autositz (1) nach einem beliebigen der Ansprüche 1 bis 6, **dadurch gekennzeichnet, dass** die ersten und/oder zweiten Kraftbegrenzungseinrichtungen einen Elektromotor, einen Gurt mit kontrollierter Streckung und/oder ein mechanisch verformbares Element umfassen.

8. Autositz (1) nach einem beliebigen der Ansprüche 1 bis 7, **dadurch gekennzeichnet, dass** die Rückhalteeinrichtungen (15) für ein Kind ein Geschirr (15) umfassen, und dass die Rückhalteeinrichtungen (13, 14) für den Sitz einen Verbindungsgurt (14) für einen oberen Teil der Rückenlehne (111) des Sitzes (1) an einem dafür vorgesehenen Anschlagpunkt in einem Fahrzeug, den "Top Tether"-Gurt und/oder Verbindungsklemmbalken (13) zu dafür vorgesehenen Ringen in einem Fahrzeug umfassen.

9. Autositz (1) nach einem beliebigen der Ansprüche 1 bis 8, **dadurch gekennzeichnet, dass** die Steuereinrichtungen die Kraftbegrenzungseinrichtungen gleichzeitig oder zeitlich nacheinander betätigen.

10. Sicherheitsverfahren eines Kinder-Autositzes (1), umfassend folgende Schritte:
- Erfassen (71) eines Aufpralls, der stärker ist als ein vorgegebener Schwellwert;
- Senden einer Information über die Aufprallerkennung an Steuereinrichtungen;
- vorübergehendes vorgegebenes Vorspannen (72), aufgebracht auf mindestens ein Rückhalteelement für den Sitz und auf mindestens Rückhalteelement für das Kind gemäß einer durch die Steuereinrichtungen ausgegebenen Ansteuerung,
**dadurch gekennzeichnet, dass** es außerdem die folgenden Schritte umfasst:
- Begrenzung (73) der auf das mindestens eine Rückhalteelement für den Sitz wirkenden Kräfte, die eine erste kontrollierte Bewegung des Sitzes bezüglich des Fahrzeugs zulässt, in dem er eingebaut ist;
- Begrenzung der auf das mindestens eine Rückhalteelement für das Kind wirkenden Kräfte, die eine zweite kontrollierte Bewegung des Kindes bezüglich des Sitzes zulässt.

## Claims

1. Child car seat (1), comprising means for detecting an impact, first means for applying a predetermined pre-tension on at least one retaining element of said seat (13, 14) and second means for applying a predetermined pre-tension on at least one retaining element of said child (15);
**characterised in that** it comprises:
- first means for limiting the forces mounted on said at least one retaining element of said seat (13, 14), allowing for a controlled displacement of said seat (1) with respect to the vehicle in which it is installed;
- second means for limiting the forces mounted on said at least one retaining element of said child (15), allowing for a second controlled displacement of said seat with respect to said seat (1),
said first and second means for applying a pre-tension being triggered by a command delivered by control means supplied by said means for detecting an impact, and said first and second means for limiting the forces being active as soon as said seat, respectively said child, reaches a predetermined maximum force,
said first and second displacements being combined so that the child is displaced with respect to the vehicle according to this combination of displacements.

2. Car seat (1) according to claim 1, **characterised in that** said retaining element or elements of the seat (13, 14) belong to the group comprising:
- the straps (14) for attaching an upper part of the seat back of said seat to an anchoring point provided for this purpose in a vehicle, referred to as "top tether" strap;
- the clips (13) for fastening to rings provided for this purpose in a vehicle;
- a supporting leg of said seat or of a base that carries it;
- the connection means between a base and said seat.

3. Car seat (1) according to any of claims 1 and 2, **characterised in that** said retaining element or elements of the child belong to the group comprising:
- the harnesses (15) for retaining a child;
- the shields for retaining a child.

4. Car seat (1) according to any of claims 1 to 3, **characterised in that** said first and/or second means of pre-tensioning are triggered between 10 ms and 80 ms after the impact.

5. Car seat (1) according to any of claims 1 to 4, **characterised in that** said first and/or second means for limiting the forces is triggered between 20 ms and 100 ms after the impact.

6. Car seat (1) according to any of claims 1 to 5, **characterised in that** said first and/or second means of pre-tensioning include an electric motor (29) and/or a pyrotechnic charge.

7. Car seat (1) according to any of claims 1 to 6, **characterised in that** said first and/or second means for limiting the forces comprise an electric motor, a strap with controlled extension and/or a mechanically deformable element.

8. Car seat (1) according to any of claims 1 to 7, **characterised in that** said means for retaining a child (15) comprise a harness (15), and **in that** said means for retaining the seat (13, 14) comprise a strap (14) for fastening an upper part of the seat back (111) of said seat (1) to an anchoring point provided for this purpose in a vehicle, referred to as "top tether" strap and/or clips (13) for fastening to rings provided for this purpose in a vehicle.

9. Car seat (1) according to any of claims 1 to 8, **characterised in that** said control means actuate said means for limiting forces simultaneously or in a sequenced manner over time.

10. Method for securing a child car seat (1), **characterised in that** it comprises the following steps:
- detecting (71) an impact greater than a predetermined threshold;
- transmitting impact detection information to control means;
- applying (72) a predetermined temporary pre-tension on at least one retaining element of said seat and on at least one retaining element of said child, according to a command delivered by said control means;
- limiting (73) the forces applied to at least one retaining element of said seat, authorising a first controlled displacement of said seat with respect to the vehicle in which it is installed;
- limiting the forces applied to at least one retaining element of said child, authorising a second controlled displacement of said seat with respect to said seat.
